# EUROPEAN PATENT APPLICATION

(11) **EP 3 757 904 A1**
(43) Date of publication of application: **30.12.2020**
(21) Application number: 19187585.5
(22) Date of filing: 22.07.2019
(51) Int. Cl.: G06N 3/08, G06N 3/04

(54) **DEVICE AND METHOD FOR TRAINING A NEURAL NETWORK**

(30) Priority: 28.06.2019 EP 19183437
(71) Applicant: Robert Bosch GmbH, 70442 Stuttgart (DE)
(72) Inventor: Gladisch, Christoph, 71272 Renningen (DE); Groh, Konrad, 70192 Stuttgart (DE); Woehrle, Matthias, 74321 Bietigheim-Bissingen (DE); Heinzemann, Christian, 71640 Ludwigsburg (DE)

(57) **Abstract**

A device and a method for training a neural network are disclosed, wherein the method of training a neural network includes: performing a real-world test based on test data (202) to provide a first test result (208), performing a simulation (210) of the real-world test based on the test data (202) to provide a second test result (216) using a simulation model of the real-world test, training a neural network (302) using the test data (202), the first test result (208), and the second test result (216) to provide an indication whether the second test result corresponds to the first test result.

## Description

Various embodiments generally relate to a device and a method for training a neural network.

For verification and validation processes, real-world tests may be performed. By way of example, it is important to test electrical components and/or mechanical components individually and/or in cooperation, e.g. as components of a larger system such as a vehicle. Examples for such components may be the anti blocking system, a break, an airbag, etc.

Real-world tests have a high cost, which is why simulation based models are often applied to simulate a real-world behavior. Simulation based models are approximations of real-world behavior and may create false positive (spurious faults) and false negative (overlooked problems) results. Thus, it may be necessary to verify and/or validate simulation results.

Previous approaches usually relied on expert knowledge and experimentation, wherein back-to-back tests of simulations versus real-world tests are performed.

The method and the device with the features of the independent claims 1 (first example) and 12 (twenty-sixth example) enable a neural network to be trained to verify and/or validate if simulation results represent real-world behavior.

A real-world test (real field test) may be any kind of test or scenario performed in the real world. The scenario, situation and/or test parameter are defined by the test data. In other words, the test data specify the scenario, situation and/or test parameter of the real-world test.

A simulation may be based on, more specifically use, any kind of simulation model (for example a physical model). The simulation of the real-world test may be any kind of code, which, if implemented by a processor, is capable of simulating a real-world behavior. The simulation may be a static or a dynamic simulation, a stochastic or deterministic simulation.

A neural network may be any kind of neural network, such as an auto-encoder network or a convolutional neural network. The neural network may include any number of layers and the training of the neural network, i.e. adapting the layers of the neural network, may be based on any kind of training principle, such as backpropagation, i.e. the backpropagation algorithm.

At least a part of the neural network may be implemented by one or more processors. The feature mentioned in this paragraph in combination with the first example provides a second example.

The first test result may be based on sensor data. The sensor data may be provided by one or more sensors. The features mentioned in this paragraph in combination with the first example or the second example provide a third example.

The real-world test may provide a real-world test output and the first test result may be based on the real-world test output. The feature mentioned in this paragraph in combination with the third example provides a fourth example.

The first test result may be based on the real-world test output and on evaluation parameters. The evaluation parameters may include a specific requirement for passing a verification and/or validation process. This has the effect that first test result includes information if a specific requirement for passing a verification and/or validation process, as defined by the evaluation parameters, is fulfilled or not. The features mentioned in this paragraph in combination with the fourth example provide a fifth example.

At least a part of the simulation model may be implemented by one or more processors. The feature mentioned in this paragraph in combination with any one of the first example to the fifth example provides a sixth example.

The simulation may provide a simulation test output based on the test data and the second test result may be based on the simulation test output. The features mentioned in this paragraph in combination with any one of the first example to the sixth example provide a seventh example.

The second test result may be based on the simulation test output and the evaluation parameters. This has the effect that second test result also includes information if a specific requirement for passing a verification and/or validation process is fulfilled or not according to the simulation. The feature mentioned in this paragraph in combination with the seventh example provides an eighth example.

The evaluation parameters may include a polar question, i.e. a yes-no question, and the first test result and/or the second test result may include a result (in other words an answer to the polar question), i.e. a yes-no result or classification. This has the effect that the first test result and/or the second test result only describe two states, i.e. if a specific requirement for passing a verification and/or validation process is fulfilled (yes) or not (no). The features mentioned in this paragraph in combination with any one of the fifth example to the eighth example provide a ninth example.

The test data may be selected based on the evaluation parameters, i.e. based on a specific requirement or specific requirements on a system. In other words, the test parameter or test conditions may be selected based on specific system requirements. The feature mentioned in this paragraph in combination with any one of the fifth example to the ninth example provides a tenth example.

The evaluation parameters may be selected based on the test data. In other words, a real-world test may be performed and the evaluation parameters may be selected based on the outcome of the real-world test. This has the effect that depending on the outcome of the real-world test (for example an unexpected outcome) specific requirements may be checked retrospectively. The feature mentioned in this paragraph in combination with any one of the fifth example to the ninth example provides an eleventh example.

The real-world test may be further based on real-world-specific test data and/or the simulation may be further based on simulation-specific test data. The real-world-specific test data may be different from the simulation-specific test data. The test data may define the test parameter, which are common for the real-world test and the simulation. The features mentioned in this paragraph in combination with any one of the first example to the eleventh example provide a twelfth example.

The simulation may provide information about one or more internal states of the simulation model. In other words, the simulation may provide information about one or more internal states of the simulation model, which occur during performing the simulation based on the test data. The feature mentioned in this paragraph in combination with any one of the first example to the twelfth example provides a thirteenth example.

The information about one or more internal states of the simulation model may include intermediate calculation values of the simulation model. The feature mentioned in this paragraph in combination with the thirteenth example provides a fourteenth example. Furthermore, the information about one or more internal states of the simulation model may include values for which the simulation model is not valid. The feature mentioned in this paragraph in combination with the fourteenth example provides a fifteenth example.

The real-world test may be a test of an electrical component and/or mechanical component. The feature mentioned in this paragraph in combination with any one of the first example to the fifteenth example provides a sixteenth example.

The at least one first test result may include a plurality of first test results. The at least one second test result may include a plurality of second test results. The training the neural network may include using the test data, the plurality of first test results, and the plurality of second test results to provide an indication whether the second test results correspond to the first test results. The feature mentioned in this paragraph in combination with any one of the first example to the sixteenth example provides a seventeenth example.

Training the neural network may include providing a neural network output based on the test data and the second test result. The neural network output may include a prediction if the evaluation parameters will result in a similar output in a real-world test. In other words, the neural network can predict the outcome of a real-world test based on the test data and the second test result provided by the simulation. The features mentioned in this paragraph in combination with any one of the first example to the seventeenth example provide an eighteenth example.

The neural network output may be provided based on the test data, the second test result, the information about one or more internal states of the simulation, and the simulation test output. The information about one or more internal states of the simulation may include for example intermediate calculation values, which can be below or above threshold values (for example pressure limits) of the simulation. In other words, the intermediate calculation values may include values for which the simulation is not valid or for which the resulting errors are much higher. This has the effect that the accuracy of the neural network output, and thus, the prediction if the real-world test will fulfill the evaluation parameters or not, is improved. This has the further effect that the trained neural network is capable of identifying false simulation results, such as false positive and false negative simulation results The features mentioned in this paragraph in combination with any one of the first example to the eighteenth example provide a nineteenth example.

Training the neural network may further include to determine an output loss based on a comparison of the neural network output with the first test result. The output loss may be determined based on a loss function. Training the neural network may include adapting the neural network based on the output loss. The features mentioned in this paragraph in combination with the eighteenth example or the nineteenth example provide a twentieth example.

Adapting the neural network may include adapting the neural network such that the output loss is minimized. Thus, the trained neural network is capable of providing a prediction of the outcome of a real-world test, which would be performed based on the test data. This has the effect that simulations can be performed replacing high cost real-world tests. Further, if a plurality of simulations is performed, the trained neural network is capable of selecting which simulation results do not simulate or model the real-world behavior or which simulation results are not reliable. The feature mentioned in this paragraph in combination with the twentieth example provides a twenty-first example.

The one or more sensors may include at least one imaging sensor and the sensor data may include (digital) imaging data, including a plurality of images. The imaging sensor may be any type of sensor, which is capable of providing imaging data directly, such as a camera sensor or a video sensor, or after pre-processing, such as any kind of localization sensor like radar sensor, LIDAR sensor or ultrasonic sensor, which provide imaging data after pre-processing by any imaging method. The features mentioned in this paragraph in combination with any one of the third example to the twenty-first example provide an twenty-second example.

At least a part of the simulation may be implemented by a graphics engine, for example a three dimensional graphics engine. The graphics engine may implement at least a part of a computer vision system. The features mentioned in this paragraph in combination with the twenty-second example provide a twenty-third example.

The simulation of the real-world test based on the test data may include providing a plurality of synthetic images, which correspond to the plurality of images provided by the real-world test. The feature mentioned in this paragraph in combination with the twenty-third example provides a twenty-fourth example.

The real-world test output may include a classified and segmented image and the simulation test output may include a classified and segmented synthetic image. The classified and segmented image and the classified and segmented synthetic image may be provided by a classification neural network. At least a part of the classification neural network may be implemented by one or more processors. The features mentioned in this paragraph in combination with the twenty-fourth example provide a twenty-fifth example.

At least a part of the neural network may be implemented by one or more processors. At least a part of the simulation may be implemented by one or more processors. The features mentioned in this paragraph in combination with the twenty-sixth example provide a twenty-seventh example.

The real-world test may be a test of an electrical component and/or mechanical component. The features mentioned in this paragraph in combination with any one of the twenty-sixth example or the twenty-seventh example provide an twenty-eighth example.

The method may further include evaluating the electrical component and/or mechanical component based on the simulation test result depending on the indication whether the simulation test result corresponds to the real-world test if it is performed. The features mentioned in this paragraph in combination with any one of the twenty-sixth example to the twenty-eighth example provide an twenty-ninth example.

Moreover, a training device is provided. The training device may be configured to perform the method of any one of Examples one to twenty-nine. The features mentioned in this paragraph provide a thirtieth example.

Moreover, a control system is provided. The control system may include a neural network trained by the method of any one of Examples one to twenty-nine. The features mentioned in this paragraph provide a thirty-first example.

A computer program may include program instructions configured to, if executed by one or more processors, perform the method of any one of the first example to the twenty-ninth example. The feature mentioned in this paragraph provides a thirty-second example.

The computer program may be stored in a machine-parsable storage media. The feature mentioned in this paragraph in combination with the thirty-second example provides a thirty-third example.

Various embodiments of the invention are described with reference to the following drawings, in which:
- Figure 1: show a device according to various embodiments;
- Figure 2: shows a processing system according to various embodiments;
- Figure 3A: shows a processing system for training a neural network according to various embodiments;
- Figure 3B: shows a processing system for training a neural network according to various embodiments;
- Figure 4: shows an imaging device according to various embodiments;
- Figure 5: shows a processing system for training a neural network according to various embodiments;
- Figure 6: shows a method of training a neural network according to various embodiments;
- Figure 7A: shows a processing system for using a trained neural network according to various embodiments;
- Figure 7B: shows a processing system for using a trained neural network according to various embodiments.

In an embodiment, a "circuit" may be understood as any kind of a logic implementing entity, which may be hardware, software, firmware, or any combination thereof. Thus, in an embodiment, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be software being implemented or executed by a processor, e.g. any kind of computer program, e.g. a computer program using a virtual machine code such as e.g. Java. Any other kind of implementation of the respective functions which will be described in more detail below may also be understood as a "circuit" in accordance with an alternative embodiment.

Various embodiments relate to a device and a method of training a neural network with the result that the trained neural network is capable of predicting the result of a real-world test based on a simulation of the real-world test. In other words, the trained neural network can predict if a real-world test will meet a specific requirement or not. Thus, illustratively, it is now possible to provide a degree of reliability of the simulation results with respect to a real-world test.

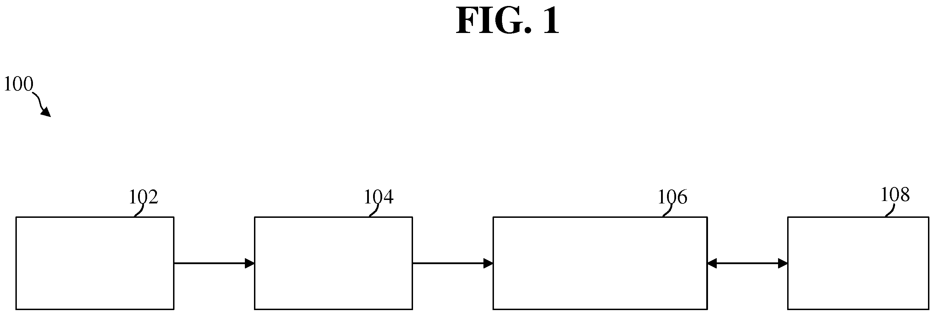

**FIG. 1** shows a device 100 according to various embodiments. The device 100 may include one or more sensors 102. The sensor 102 may be configured to provide (digital) sensor data 104. The sensor 102 may be any kind of sensor, which is capable of providing (digital) sensor data, such as an imaging sensor, a localization or proximity sensor, an acceleration sensor, a pressure sensor, a light sensor, a temperature sensor etc. The plurality of sensors may be of the same type of sensor or of different sensor types. The device 100 may further include a memory device 106. The memory device 106 may include a memory which is for example used in the processing carried out by a processor. A memory used in the embodiments may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory). The memory device 106 may be configured to store the sensor data 104 provided by the one or more sensors 102. The device 100 may further include at least one processor 108. The at least one processor 108 may be any kind of circuit, i.e. any kind of logic implementing entity, as described above. In various embodiments, the processor 108 may be configured to process the sensor data 104. The device 100 may be part of a real-world test. The sensor 102 may provide the sensor data 104 obtained during the real-world test.

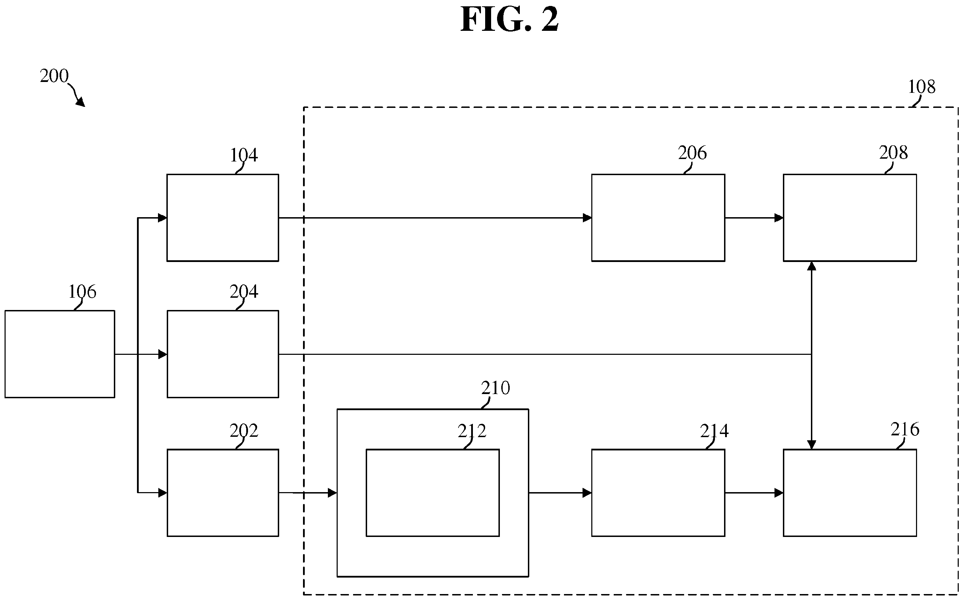

**FIG. 2** shows a processing system 200 according to various embodiments. A real-world test may be performed based on test data 202. In other words, the test data 202 specify the test parameters of the real-world test. The processing system 200 may include the sensor 102. The sensor 102 may provide sensor data 104 obtained during the real-world test. The processing system 200 may include the memory device 106. The memory device 106 may store the sensor data 104 and the test data 202. The memory device 106 may further store evaluation parameters 204. The evaluation parameters 204 may include a specific requirement for passing a verification and/or validation process. The evaluation parameters 204 may include a polar question, i.e. a yes-no question (a question that can be answer with yes or no). The test data 202 may be selected in advance of the real-world test based on the evaluation parameters 204 or the evaluation parameters 204 may be selected based on the test data 202. The processing system 200 may further include the at least one processor 108. The processor 108 may be configured to process the sensor data 104 and may be further configured to output a real-world test output 206. The real-world test output 206 may be any kind of processed sensor data 104. According to various embodiments, the evaluation parameters 204 are selected after performing the real-world test based on the real-world test output 206. The processor 108 may be configured, to process the real-world test output 206 and to provide a first test result 208 based on the real-world test output 206 and the evaluation parameters 204. The first test result 208 may include an evaluation of the real-world test output 206 based on the evaluation parameters 204. If the evaluation parameters 204 include a polar question, the first test result 208 may include a answer, i.e. a yes-no (Y/N) answer. In other words, the first test result 208 may state if a specific requirement defined by the polar question of the evaluation parameters 204 is fulfilled (Y) or not (N).

The processor 108 may be further configured to implement at least a part of a simulation 210 of the real-world test (further denoted as simulation 210 only). The simulation 210 may be any kind of code, which, if implemented by the processor 108, is capable of simulating a real-world behavior. The simulation 210 may simulate the real-world test based on the test data 202. The simulation 210 may include information about one or more internal states 212 and may be configured to provide the information about one or more internal states 212. The simulation 210 may be configured to process the test data 202 and may be configured to provide a simulation test output 214. The processor 108 may be configured to process the simulation test output 214 and to provide a second test result 216 based on the simulation test output 214 and the evaluation parameters 204. The second test result 216 may include an evaluation of the simulation test output 214 based on the evaluation parameters 204. If the evaluation parameters 204 include a polar question, the second test result 216 may include a answer (Y/N answer). In other words, the second test result 216 may state if a specific requirement defined by the polar question of the evaluation parameters 204 is fulfilled (Y) or not (N). The first test result 208 and the second test result 216 are based on the same evaluation parameters, for example the same polar question, for example the same specific requirement.

According to various embodiments, the real-world test may be further based on real-world-specific test data and/or the simulation 210 may be further based on simulation-specific test data. The real-world-specific test data may be different from the simulation-specific test data. In other words, the real-world test and the simulation 210 may be based on various test data, including the test data 202 and real-world-specific test data or simulation-specific test data. The test data 202 define the test parameters, which are common for the real-world test and the simulation 210.

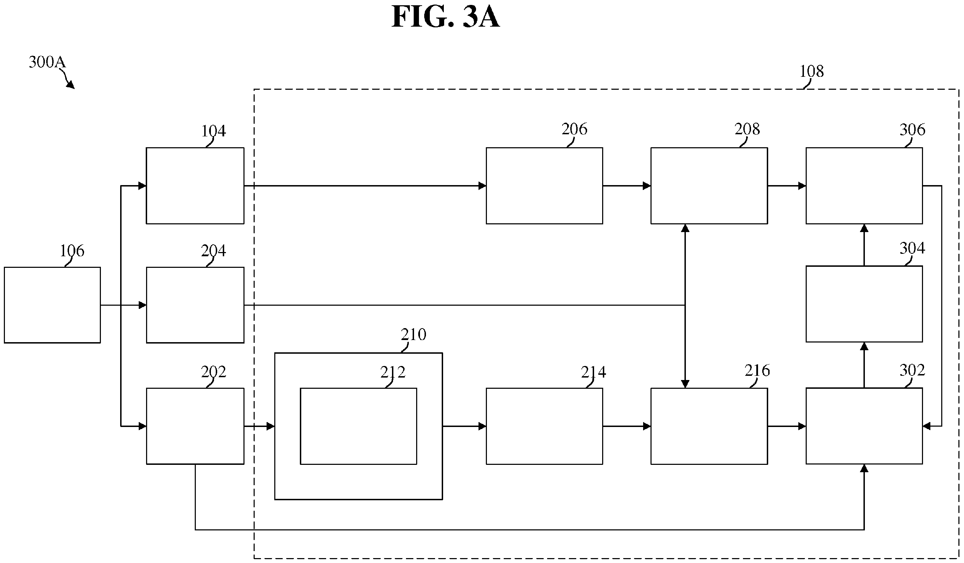

**FIG. 3A** shows a processing system 300A for training a neural network according to various embodiments. The processing system 300A may correspond substantially to the processing system 200. The processor 108 is further configured to implement at least a part of a neural network 302. The neural network 302 may be configured to process the test data 202 and the second test result 216 and may be further configured to provide a neural network output 304. According to various embodiments the first test result 208 and the second test result 216 include a Y/N answer based on the same evaluation parameters 204 defined by a polar question with respect to a specific requirement. The neural network output 304 may include a prediction of the first test result 208, i.e. a prediction of the result of the real-world test. In other words, the neural network output 304 may include a prediction if the real-world test will fulfill the evaluation parameters 204, such as the requirement defined by the polar question, or not. The processor 108 may be configured to determine an output loss 306 based on a comparison of the neural network output 304, i.e. a predicted first test result, with the first test result 208. The output loss 306 may include an output loss value. The output loss value may be determined by a loss function. The output loss may be a classification loss and may be determined by a classification loss function, such as a cross entropy loss function (i.e. a log loss function).

The processor 108 may be further configured to adapt the neural network 302 based on the output loss 306. The neural network 302 may be adapted such that the output loss 306 is minimized.

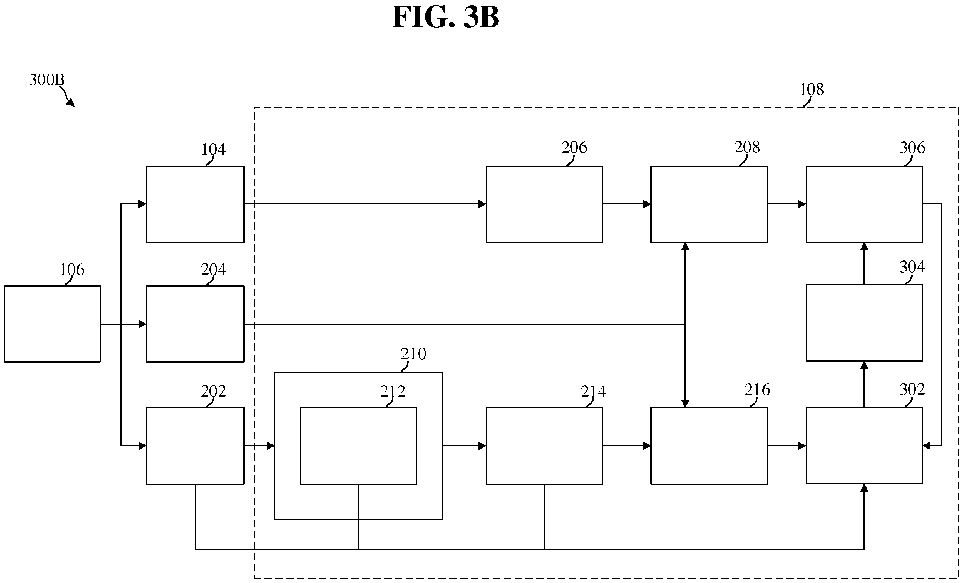

**FIG. 3B** shows a processing system 300B for training a neural network according to various embodiments. The processing system 300B may correspond substantially to the processing system 300B. The neural network 302 is configured to process the test data 202, the information about one or more internal states 212 provided by the simulation 210, the simulation test output 214, and the second test result 216 and to provide the neural network output 304 based on these. This has the advantage that the accuracy of the neural network output 304 is improved.

According to various embodiments, a plurality of sensor data is provided by a plurality of sensors, such as an imaging sensor, a localization or proximity sensor, an acceleration sensor, a pressure sensor, a light sensor, a temperature sensor etc., and the plurality of sensor data is stored in the memory device 106. The processing system 300A and/or the processing system 300B may be configured to process the plurality of sensor data provided by a plurality of sensors.

The evaluation parameters 204 may include any kind of event or scenario related to the real-world test, such as if an object in the proximity of a car can be detected and/or if the car can be stopped before hitting the object. Thus, the evaluation parameters 204 may be related to various systems like a vision system, including sensors such as imaging sensors and localization or proximity sensors, and a controller system, including a plurality of sensors related to for example an electronic stability program (ESP) or an anti-lock braking system (ABS). The test data 202 may include test parameter such as road conditions, velocities, brake-pressures, etc., and/or a chronological sequence thereof.

In the following, embodiments will be described based on imaging data as sensor data 104. The imaging data may be provided by an imaging sensor. However, it is noted, that the sensor 102 may be any kind of sensor, which is capable of providing (digital) sensor data 104 and that any other sensor data 104 may be used.

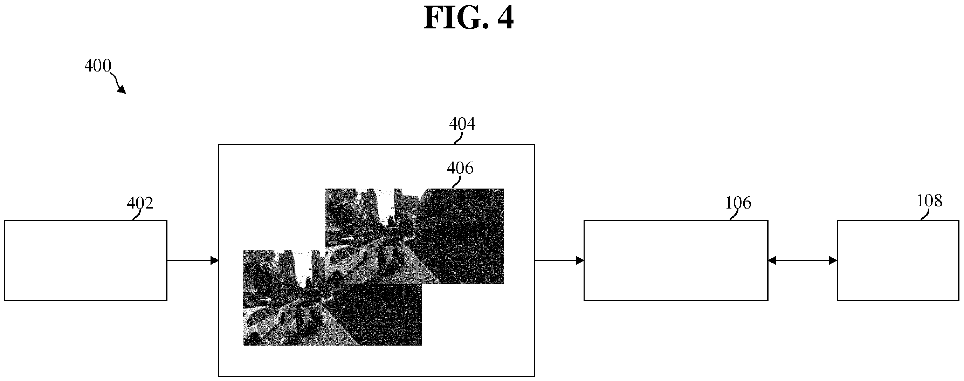

**FIG. 4** shows an imaging device 400 according to various embodiments. The sensor 102 is implemented as imaging sensor 402. The imaging sensor 402 may be a camera sensor or a video sensor. The imaging sensor 402 may be any other type of sensor, which is capable of providing (digital) imaging data 404 directly or after a pre-processing such as any kind of localization sensor like radar sensor, LIDAR sensor or ultrasonic sensor, which provide imaging data 404 after being pre-processed by an imaging method. The imaging data 404 may include a plurality of images 406. Each image of the plurality of images 406 may illustrate a scene with a plurality of objects, such as a street, cars, pedestrians, cyclists etc. The imaging device 400 may further include the memory device 106 and the at least one processor 108. The memory device 106 may be configured to store the imaging data 404 provided by the imaging sensor 402. The processor 108 may be configured to process the imaging data 404, e.g. as described above or as will be described further below.

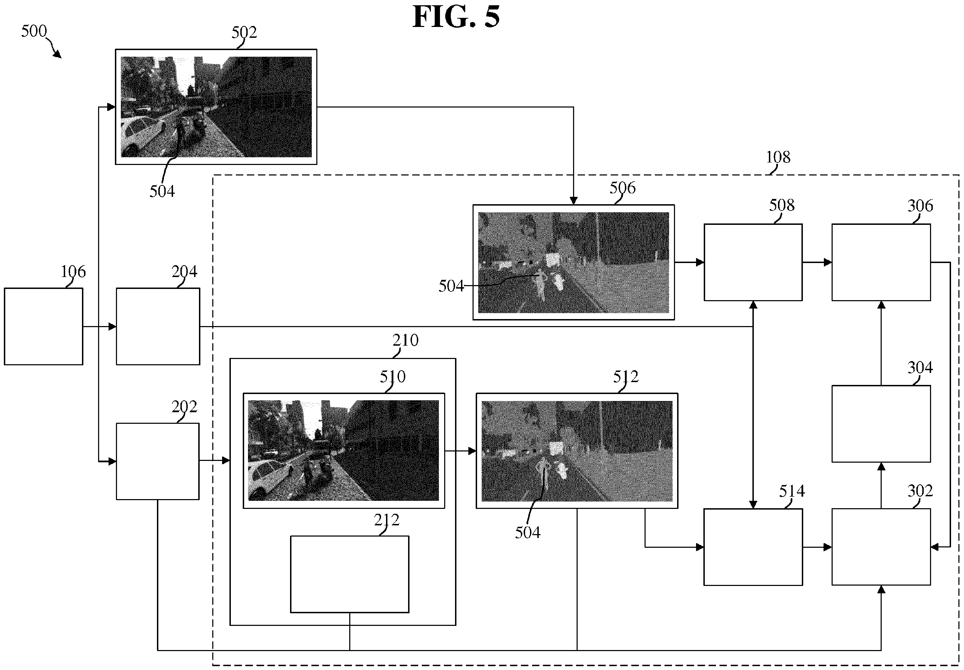

**FIG. 5** shows a processing system 500 for training a neural network according to various embodiments. Imaging data 404, including a plurality of images 406, such as an image 502, are provided by an imaging sensor 402. A real-world test may be performed based on the test data 202 and the imaging sensor 402 may provide the imaging data 404, including the image 502, obtained during the real-world test. The imaging data 404 may be stored in the memory device 106. The image 502 may illustrate a scene with a street, a plurality of cars, a plurality of pedestrians, a motorcyclist, and an oncoming cyclist 504.

The memory device 106 may further store the test data 202 and the evaluation parameters 204. According to various embodiments, the evaluation parameters may include a specific requirement for passing a verification and/or validation process, which may include a polar question (Y/N question). The evaluation parameters may include the polar question if the oncoming cyclist 504 is detected by the processing system (Y) or not (N).

The processing system 500 may further include the at least one processor 108. The processor 108 may be configured to process the imaging data 404, such as the image 502, and to provide a classified and segmented image 506. The processor 108 may be configured to implement a classification neural network. The classification neural network may be configured to process the imaging data 404 and to provide classified and segmented images. The processor 108 may be configured to process the classified and segmented image 506 and to provide a first evaluation result 508 based on the evaluation parameters 204. The first evaluation result 508 includes if the oncoming cyclist 504 is detected or not, i.e. a Y/N answer. In other words, the first evaluation result 508 may include if the oncoming cyclist 504 is classified and segmented in a correct manner.

The processor 108 may be configured to implement at least a part of the simulation 210. The simulation 210 simulates the real-world test based on the test data 202. According to various embodiments, the processing system 500 may include a graphics engine (for example a three dimensional graphics engine). The graphics engine may be any kind of graphic implementing entity, i.e. hardware, software or a combination of both. The graphics engine may be configured to implement a computer vision system. The computer vision system may be based on synthetic images for autonomous driving or optical inspection for example. The computer vision system or the graphics engine may be configured to implement at least a part of the simulation 210. The simulation 210 may be configured to process the test data 202 and to provide a plurality of synthetic images. In other words, the simulation 210 may process the test data 202 to provide a plurality of synthetic images, which correspond to the plurality of images 406 provided by the real-world test. In even other words, the simulation 210 may simulate the real-world test in such, that the imaging data 404, obtained during the real-world test, are simulated, i.e. synthesized, to synthetic imaging data. A synthetic image 510 may be based on the test data 202. The synthetic image 510 may illustrate the scene corresponding to the image 502, i.e. a street, a plurality of cars, a plurality of pedestrians, a motorcyclist, and an oncoming cyclist 504. The simulation 210 may further include information about one or more internal states 212 and may be configured to provide the information about one or more internal states 212. The processor 108 may be configured to process the synthetic imaging data, such as the synthetic image 510, and to provide a classified and segmented synthetic image 512. The processor 108 may be configured to implement a classification neural network. The classification neural network may be configured to process the synthetic imaging data and to provide classified and segmented synthetic images. According to various embodiments, the imaging data 404 and the synthetic imaging data are processed by the same classification neural network. The processor 108 may be further configured to process the classified and segmented synthetic image 512 and to provide a second evaluation result 514 based on the evaluation parameters 204, i.e. based on the polar question if oncoming cyclist 504 is detected or not (Y/N answer). In other words, the second evaluation result 514 may include if the oncoming cyclist 504 is classified and segmented in a correct manner.

The processor 108 may be configured to implement the neural network 302. According to various embodiments, the neural network 302 is configured to process the test data 202, the information about one or more internal states 212 of the simulation 210, the classified and segmented synthetic image 512, and the second evaluation result 514 and to provide a neural network output 304. The neural network output 304 may include a prediction of the first evaluation result 508, i.e. a prediction of the result of the real-world test. In other words, the neural network output 304 may include a prediction if the real-world test will fulfill the evaluation parameters 204, i.e. a prediction if the oncoming cyclist 504 is detected (Y) or not (N). The processor 108 may be configured to determine an output loss 306 based on a comparison of the neural network output 304, i.e. a predicted first evaluation result, with the first evaluation result 508. The output loss 306 may include an output loss value. The output loss value may be determined by a loss function. The processor 108 may be further configured to adapt the neural network 302 based on the output loss 306. The neural network 302 may be adapted such that the output loss 306 is reduced, e.g. minimized.

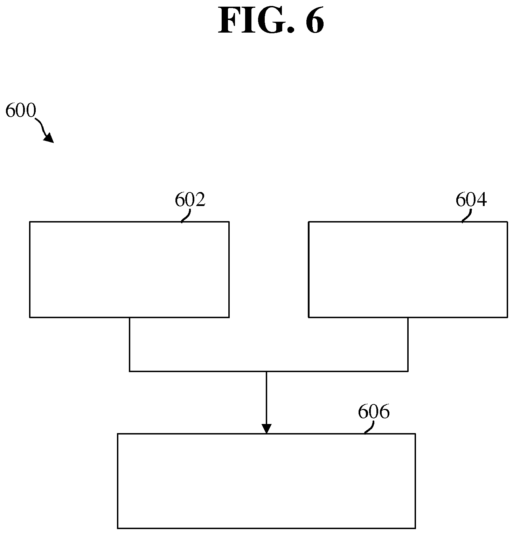

**FIG. 6** shows a method 600 of training a neural network according to various embodiments. The method 600 may include performing a real-world test (in 602). The real-world test may be based on test data 202. The real-world test may provide a real-world test output 206 based on the test data 202. The real-world test may provide a first test result 208. The first test result 208 may be based on the test data 202. The first test result 208 may be further based on evaluation parameters 204. The method 600 may further include performing a simulation 210 of the real-world test (in 604). The simulation 210 may simulate the real-world test based on the test data 202. The simulation 210 may include information about one or more internal states 212. The simulation 210 may provide a simulation test output 214 based on the test data 202. The simulation 210 may further provide a second test result 216. The second test result 216 may be based on the test data 202. The second test result 216 may be further based on the evaluation parameters 204. The method 600 may include training a neural network 302 (in 606). The neural network 302 may be trained based on the test data 202, the first test result 208, and the second test result 216. According to various embodiments, the neural network 302 is trained based on the test data 202, the first test result 208, the second test result 216, the information about one or more internal states of the simulation 210, and the simulation test output 214.

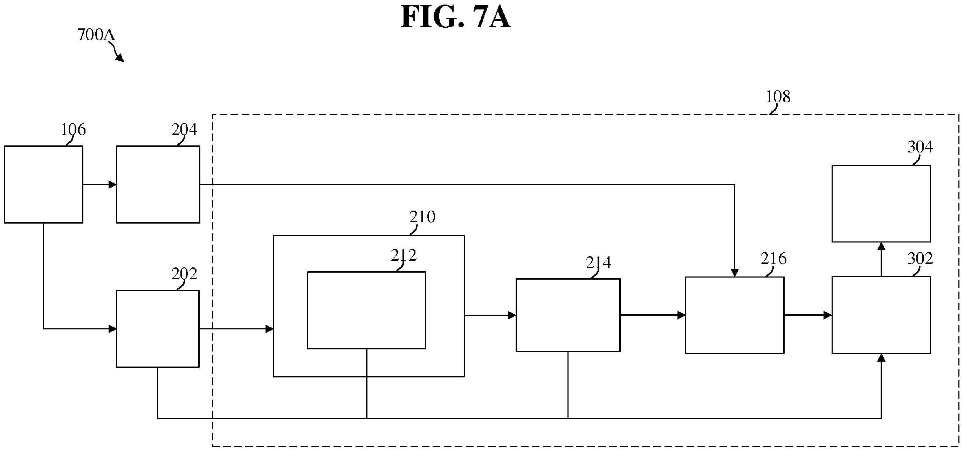

**FIG. 7A** shows a processing system 700A for using a trained neural network according to various embodiments. The processing system 700A may include the memory device 106 to store the test data 202 and the evaluation parameters 204. The processing system 700A may further include the at least one processor 108. The processor 108 may be configured to implement the simulation 210. The simulation 210 may be configured to process the test data 202, to provide information about one or more internal states 212 of the simulation 210, and to provide a simulation test output 214 based on the test data 202. The processor 108 may be configured to process the simulation test output 214 and the evaluation parameters 204 and to provide a simulation test result 216. The processor 108 may be further configured to implement at least a part of the neural network 302. The neural network 302 was trained by the method 600 of training a neural network. The trained neural network 302 may be configured to process the test data 202 and the simulation result 216 and to provide a neural network output 304. According to various embodiments, the trained neural network 302 is configured to process the test data 202, the simulation test result 216, the information about one or more internal states 212, and the simulation test output 214 and to provide the neural network output 304. The neural network output 304 may include a prediction if the real-world test will fulfill the evaluation parameters 204, such as the requirement defined by the polar question, or not.

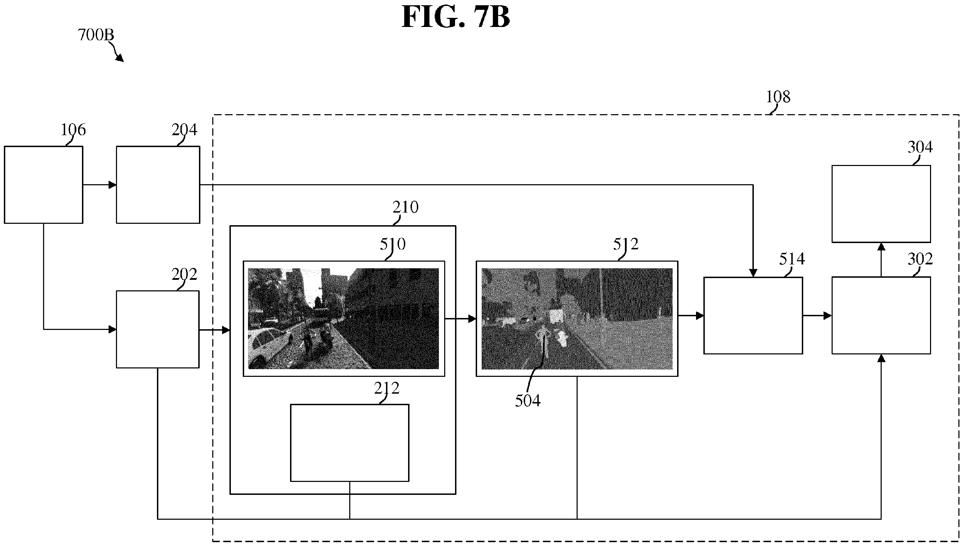

**FIG. 7B** shows a processing system 700B for using a trained neural network according to various embodiments. The simulation 210 is implemented by a graphics engine (for example a three dimensional graphics engine). The graphics engine may be configured to implement a computer vision system. The graphics engine and/or the computer vision system may be configured to implement at least a part of the simulation 210. The processing system 700B may include the memory device 106 to store the test data 202 and the evaluation parameters 204. The processing system 700B may further include the at least one processor 108. The processor 108 may be configured to implement the simulation 210. The simulation 210 may be configured to process the test data 202 and to provide a plurality of synthetic images, such as the synthetic image 510. The simulation 210 may be further configured to provide information about one or more internal states 212 of the simulation 210. The processor 108 may be configured process the synthetic image 510 and to provide a classified and segmented synthetic image 512. The processor 108 may be configured to implement a classification neural network. The classification neural network is configured to process the synthetic image 510 and to provide the classified and segmented synthetic image 512. The classified and segmented synthetic image 512 may illustrate a scene with a street, a plurality of cars, a plurality of pedestrians, a motorcyclist, and an oncoming cyclist 504. The evaluation parameters 204 may include the polar question if the oncoming cyclist 504 is detected or not in the real-world case. The processor 108 may be further configured to process the classified and segmented synthetic image 512 and the evaluation parameters 204, and to provide a second evaluation result 514. The processor 108 may be further configured to implement at least a part of the neural network 302. The neural network 302 was trained by the method 600 of training a neural network. The trained neural network 302 may be configured to process the test data 202 and the second evaluation result 514 and to provide a neural network output 304. According to various embodiments, the trained neural network 302 is configured to process the test data 202, the second test result 216, the information about one or more internal states 212, and the classified and segmented synthetic image 512 and to provide the neural network output 304. The neural network output 304 may include a prediction if the real-world test will fulfill the evaluation parameters 204, such as the requirement defined by the polar question, or not, i.e. if the oncoming cyclist 504 is detected in a real-world scenario. In other words, the neural network output 304 includes a prediction if the oncoming cyclist 504 will be classified and segmented in a correct manner based on imaging data provided by an imaging sensor. In even other words, the trained neural network 302 provides a prediction if a real-world test based on the test data 202 will fulfill the evaluation parameters 204.

## Claims

1. A method of training a neural network, executed by one or more processors, the method comprising:
• performing a real-world test based on test data (202) to provide at least one first test result (208);
• performing a simulation (210) of the real-world test based on the test data (202) to provide at least one second test result (216) using a simulation model of the real-world test;
• training a neural network (302) using the test data (202), the at least one first test result (208), and the at least one second test result (216) to provide an indication whether the second test result (216) corresponds to the first test result (208).

2. The method of claim 1, wherein the simulation of the real-world test further provides a simulation test output.

3. The method of claim 2, wherein the second test result is provided based on evaluation parameters and the simulation test output.

4. The method of any one of claims 1 to 3, wherein the first test result (208) is based on evaluation parameters and a real-world test output provided by the real-world test.

5. The method of any one of claims 3 or 4, wherein the evaluation parameters comprise a polar question and wherein the at least one first test result (208) and the at least one second test result (216) comprise an answer to the polar question.

6. The method of any one of claims 3 to 5, wherein the test data (202) are selected based on the evaluation parameters.

7. The method of any one of claims 2 to 6, wherein training the neural network (302) further comprises using the simulation test output and information about one or more internal states of the simulation model.

8. The method of claim 7, wherein the information about one or more internal states of the simulation model comprises intermediate calculation values of the simulation model.

9. The method of claim 8, wherein the information about one or more internal states of the simulation model comprises values for which the simulation model is not valid.

10. The method of any one of claims 1 to 9, wherein the real-world test is a test of an electrical component and/or mechanical component.

11. The method of any one of claims 1 to 10,
• wherein the at least one first test result (208) comprises a plurality of first test results (208),
• wherein the at least one second test result (216) comprises a plurality of second test results (216), and
• wherein the training the neural network (302) comprises using the test data (202), the plurality of first test results (208), and the plurality of second test results (216) to provide an indication whether the second test results (216) correspond to the first test results (208).

12. A method of evaluating a simulation of a real-world test, executed by one or more processors, the method comprising:
• performing a simulation of a real-world test based on test data to provide a simulation test result using a simulation model of the real-world test;
• a neural network (302) using the simulation test result to provide an indication whether the simulation test result corresponds to the real-world test if it is performed.

13. The method of claim 12, wherein the real-world test is a test of an electrical component and/or mechanical component.

14. The method of any one of claims 12 or 13, further comprising:
evaluating the electrical component and/or mechanical component based on the simulation test result depending on the indication whether the simulation test result corresponds to the real-world test if it is performed.

15. A training device, configured to perform the method of any one of claims 1 to 14.

16. A control system, comprising a neural network trained by the method of any one of claims 1 to 11.
